# EUROPEAN PATENT APPLICATION

(11) **EP 4 480 994 A1**
(43) Date of publication of application: **25.12.2024**
(21) Application number: 24182239.4
(22) Date of filing: 14.06.2024
(51) Int. Cl.: C08G 77/12, C08G 77/20, C08K 7/14, C08K 7/20, C08K 7/28, C08L 83/04, C09K 5/14

(54) **THERMALLY INSULATING MATRIX**

(30) Priority: 15.06.2023 US 202363508284 P
(71) Applicant: Solaredge Technologies Ltd., Herzeliya 4673335 (IL)
(72) Inventor: NAOR POMERANTZ, Adi, 4673335 Herzeliya (IL); STEINER, Tomer, 4673335 Herzeliya (IL); SHANNY, Shira, 4673335 Herzeliya (IL); SHARONI, Ariel, 4673335 Herzeliya (IL); KARIV, Tal, 4673335 Herzeliya (IL)
(74) Representative: V.O.

(57) **Abstract**

A thermally insulating matrix includes a silicone phase and a glass filler having a thermal conductivity of less than about 0.1 W/mK. The silicone phase is prepared by combining: Component (A) - a polyorganosiloxane containing two silicon-bonded terminal alkenyl groups per molecule and having a molecular weight ranging from about 15,000 g/mole to about 70,000 g/mole and a kinematic viscosity ranging from about 250 cSt to about 15,000 cSt at 25°C; Component (B) - trimethylsiloxane terminated (methylhydrosiloxane - dimethylsiloxane) copolymer, containing from about 15% to about 50% methylhydrosiloxane; and a catalyst for a hydrosilylation reaction between Component (A) and Component (B). The matrix includes at least about 50 wt.% of the silicone phase, based on the total weight of the matrix.

## Description

### BACKGROUND

The present disclosure relates to a thermally insulating matrix including a silicone phase and a glass filler.

Lithium-ion secondary batteries are widely used in a wide range of electronic devices, such as mobile phones and laptops, in electric vehicles, as well as in home-, commercial- and utility energy storage systems, including, *inter alia,* wind farms, solar farms and data centers. In fact, lithium-ion batteries are the world's primary energy storage medium due to their high energy density and capacity. One of the risks associated with the use of lithium-ion batteries containing a liquid electrolyte is a thermal runaway. Thermal runaway occurs when a battery cell, or area within the cell, reaches elevated temperatures, driven by a chain of exothermic reactions resulting from a mechanical-, electric-, and/or thermal cell abuse. At elevated temperatures, exothermic decomposition of the cell materials begins. Eventually, the self-heating rate of the cell is greater than the rate at which heat can be dissipated to the surroundings, resulting in the release of the thermal energy to the adjacent cells, where the exothermic process continues, leading to fire or explosion.

Several techniques that can help mitigate battery thermal runaway exist that can function before, during, or after the triggering of the thermal runaway, according to the timeline of the accident. Effective mitigation techniques may be realized by design, monitoring, and active control of the battery stack, as applied to the material level, cell level, module level, or system level.

Battery design usually incorporates the safety requirements for thermal management. Heat-transfer pathway needs to be controlled to inhibit the thermal runaway propagation between adjacent cells. Effective methods include, *inter alia,* thermal insulation and reinforced heat dissipation. Setting thermal barriers between cells and modules is the cost-effective solution mitigating the thermal runaway propagation. A thermal barrier should have a low thermal conductivity (e.g., below 0.1 W·m⁻¹·K⁻¹) and a high working temperature (e.g., above 600°C) to maintain integrity at thermal runaway conditions.

### BRIEF SUMMARY OF THE INVENTION

The following presents a simplified summary of disclosed aspects in order to provide a basic understanding of these aspects. This summary is not an extensive overview of the aspects. It is not intended to identify key or critical elements or to delineate the scope of the disclosure.

Aspects of the disclosure relate to a thermally insulating matrix including a silicone phase and a glass filler having a thermal conductivity of less than about 0.1 W/mK. The glass filler may contain glass particles, such as essentially spherical shaped particles. The glass filler may contain glass fibers. Preferably, the glass filler is porous, e.g., containing pores within its particles or between the fibers. The glass fibers may be formed into a woven or non-woven glass wool sheet. The glass filler may be embedded into the silicone phase or encapsulated by the silicone phase. In some examples, the matrix includes glass particles that are uniformly dispersed throughout the silicone phase. In some examples, the matrix includes a glass wool enclosed within the silicone phase.

The silicone phase may contain polyorganosiloxane which is at least partially crosslinked. The silicone phase is prepared by combining a polyorganosiloxane containing two silicon-bonded terminal alkenyl groups per molecule, trimethylsiloxane terminated (methylhydrosiloxane - dimethylsiloxane) copolymer, and a catalyst for a hydrosilylation reaction between the polyorganosiloxane and the copolymer. The copolymer is configured to crosslink the polyorganosiloxane in the presence of the catalyst. The polyorganosiloxane has a molecular weight ranging from about 15,000 g/mole to about 70,000 g/mole and a kinematic viscosity ranging from about 250 cSt to about 15,000 cSt at 25°C. The copolymer comprises from about 15% to about 50% methylhydrosiloxane. The thermally insulating matrix contains at least about 50 wt.% of the silicone phase, based on the total weight of the matrix.

The thermally insulating matrix of the present invention may be formed, for example, into a substantially rigid or semi-flexible film. Such matrix may be used, *inter alia,* as a thermal barrier in lithium-ion batteries or other systems which require thermal management and insulation. Two main conditions that should preferably be fulfilled by a thermal barrier is low thermal conductivity and high mechanical stability (that allows easy handling and ensures durability). The thermally insulating matrix of the present invention may provide a synergistic combination of the glass filler and the silicone phase having enhanced thermal insulation properties and mechanical stability as compared to each of said materials alone. While the silicone phase is configured to mechanically fix the position of the glass filler, the glass filler is configured to reinforce the silicone phase. In terms of thermal properties, the glass filler which has a low thermal conductivity may contribute to the insulation ability of the matrix, e.g., by forming air gaps therewithin.

It has been surprisingly discovered by the inventors of the present invention that glass wool alone did not pass a thermal runaway test despite its low thermal conductivity, while the addition of the silicone phase provided the desired insulating properties, even though the thermal conductivity of the silicone phase is significantly higher than that of the glass filler. As mentioned hereinabove, the addition of a high amount of the silicone phase to the matrix also enhances the mechanical stability thereof. However, there is a delicate balance between the amount of silicone that enhances the thermal insulation efficiency and stability of the matrix, and the excessive amount of silicone that may reduce the insulation efficiency. When a glass filler is porous, there are discontinuities in which air may be trapped, thereby improving heat insulation of the material. Without wishing to being bound by theory or mechanism of action, it is contemplated that a glass filler that contains pores that are partially blocked by the silicone phase has better thermal insulation properties than a glass filler that has completely open pores. It is assumed that, since the heat conductivity of air that is present in the pores is significantly lower than that of the silicone phase, the presence of air-filled pores in the bulk of the matrix, while the external surface of the matrix is enclosed by the silicone phase that prevents direct heat dissipation, provides improved heat insulation also as compared with the glass filler containing pores that are completely filled by the silicone phase.

The present invention achieves the desired balance of thermal insulation by using silicone phase components having specific properties, *inter alia,* a polyorganosiloxane having a relatively high viscosity, which provide the required enclosure of the glass filler while maintaining a sufficient portion of the voids in the glass filler free from silicone phase. As explained hereinabove, it is contemplated that the balance between the unfilled but externally blocked pores (that provide better heat insulation due to the air present within the silicone phase-capped pores) and the silicone phase-filled pores provide the desired heat insulating properties and mechanical stability to the thermally insulating matrix. Furthermore, choosing specific concentrations of the crosslinking copolymer and the catalyst for preparation of the silicone phase allows control of the crosslinking rate and the extent of crosslinking of the polyorganosiloxane, thereby controlling the penetration of the silicone phase into the pores. It has been discovered by the inventors of the present invention that using a relatively high concentration of the copolymer and a relatively low concentration of the catalyst provides a thermal barrier that withstands thermal runaway tests.

When using discrete glass particles as the glass filler, controlling the crosslinking rate by choosing the concentration of the catalyst may be advantageous to prevent phase separation between the silicone phase and the glass particles so as to ensure uniform distribution of the particles within the matrix. The crosslinking degree may also be adjusted by selecting the concentration of the copolymer to manipulate the viscosity or rigidity of the resultant silicone phase so as to accommodate higher content of the glass particles. Increasing the solid content of the matrix may increase the rigidity of the matrix, such that lower viscosity of the silicone phase may be needed to balance the enhanced rigidity.

### BRIEF DESCRIPTION OF THE DRAWINGS

A more complete understanding of the present invention and the advantages thereof may be acquired by referring to the following description in consideration of the accompanying drawings, in which like reference numbers indicate like features, and wherein:
Figure 1A schematically illustrates a thermally insulating matrix containing discrete glass particles in accordance with some embodiments of the invention;
Figure 1B schematically illustrates a thermally insulating matrix containing clustered glass particles in accordance with some embodiments of the invention;
Figure 2A presents results of a thermal runaway simulation plate test, including temperature of the unheated side of the test sample and temperature difference between the plate and the heated side of the sample as a function of time;
Figure 2B presents results of the thermal runaway simulation plate test, including temperature difference between the heated and unheated side of the sample that is normalized by the sample thickness, as a function of time;
Figure 3A presents specific heat and thermal diffusivity of thermally insulating matrices according to some embodiments of the present invention that were assessed by a Hot Disk instrument test; and
Figure 3B presents thermal conductivity of thermally insulating matrices according to some embodiments of the present invention that was assessed by the Hot Disk instrument test.

### DETAILED DESCRIPTION OF THE INVENTION

Unless defined otherwise, all technical and scientific terms used herein have the same meaning as commonly understood by one of ordinary skill in the art to which this disclosure belongs.

In one aspect there is provided a thermally insulating matrix including a silicone phase and a glass filler having a thermal conductivity of less than about 0.1 W/mK. The silicone phase is prepared by combining Component (A), Component (B), and a catalyst. Component (A) is a polyorganosiloxane containing two silicon-bonded terminal alkenyl groups per molecule and having a molecular weight ranging from about 15,000 g/mole to about 70,000 g/mole and a kinematic viscosity ranging from about 250 cSt to about 15,000 cSt at 25°C. Component (B) is a trimethylsiloxane terminated (methylhydrosiloxane - dimethylsiloxane) copolymer, comprising from about 15% to about 50% methylhydrosiloxane. The catalyst is configured to catalyze a hydrosilylation reaction between Component (A) and Component (B). The matrix contains at least about 50 wt.% of the silicone phase, based on the total weight of the matrix.

In another aspect there is provided a method of manufacturing a thermally insulating matrix comprising mixing a silicone phase and a glass filler having a thermal conductivity of less than about 0.1 W/mK, wherein the matrix contains at least about 50 wt.% of the silicone phase, based on the total weight of the matrix, and wherein the silicone phase is prepared by combining Component (A), Component (B), and a catalyst. Component (A) is a polyorganosiloxane containing two silicon-bonded terminal alkenyl groups per molecule and having a molecular weight ranging from about 15,000 g/mole to about 70,000 g/mole and a kinematic viscosity ranging from about 250 cSt to about 15,000 cSt at 25°C. Component (B) is a trimethylsiloxane terminated (methylhydrosiloxane - dimethylsiloxane) copolymer, comprising from about 15% to about 50% methylhydrosiloxane. The catalyst is configured to catalyze a hydrosilylation reaction between Component (A) and Component (B).

The term "glass filler", as used herein, refers to a material, either natural or synthetic, which contains silicon dioxide (SiO₂) as its main constituent.

In order to enable heat insulation, the glass filler should have a low thermal conductivity. In some embodiments, the glass filler has a thermal conductivity of less than about 0.075 W/mK. In further embodiments, the glass filler has a thermal conductivity of less than about 0.05 W/mK. In yet further embodiments, the glass filler has a thermal conductivity of less than about 0.025 W/mK.

Thermal conductivity of the glass filler may be determined in accordance with one or more of ASTM C177, ASTM C518, and ISO 8302. In some embodiments, the thermal conductivity of the glass filler is determined in accordance with ASTM C177.

The glass filler may be in the form of discrete particles or may have a macrostructure, for example, in which said particles are clustered together. The glass filler may therefore include any suitable additive, such as a binder that helps hold said particles together. The macrostructure may be selected from a sheet, mesh, textile, paper, aerogel, foam, panel, slab or roll.

In some embodiments, the glass filler includes glass particles. The glass particles may have any shape as known in the art, such as, but not limited to, spherical, essentially spherical, polyhedral, ellipsoidal, plate, elongated shape, irregular or amorphous shape. The glass filler may further be selected from spherical particles, substantially spherical particles, beads, fibers, filaments, needles, threads, wires, tubes, rods, pillars, and any combination thereof. The term "spherical" is meant to encompass not only spherical particles but also amorphous particles with rounded edges.

In certain embodiments, the glass particles have a spherical or a substantially spherical shape.

In certain embodiments, the glass particles have an elongated shape. In some embodiments, the glass filler includes glass fibers. The term "fiber" is meant to encompass any elongated structure having an aspect ratio of at least about 1:5, including filaments, wires, ribbons, threads and thread-like structures. The glass fibers may be present in the matrix in the form of discrete fibers.

The glass filler may have particle sizes in the millimeter-, micron-, or nano-size range, ranging, for example, from several tens of nanometers to several tens of millimeters, such as, from about 50 nm to about 50 mm. In some embodiments, a mean particle size of the glass filler ranges from about 500 nm to about 10 mm. In further embodiments, the mean particle size of the glass filler ranges from about 1 µm to about 1 mm. In still further embodiments, the mean particle size of the glass filler ranges from about 0.05 mm to about 1 mm. In yet further embodiments, the mean particle size of the glass filler ranges from about 0.05 mm to about 0.5 mm. In additional embodiments, the mean particle size of the glass filler ranges from about 0.075 mm to about 0.75 mm. In certain embodiments, the mean particle size of the glass filler ranges from about 0.1 mm to about 0.3 mm.

In some embodiments, the glass particles have a mean particle size ranging from about 0.05 mm to about 1 mm. In further embodiments, the glass particles have a mean particle size ranging from about 0.075 mm to about 0.75 mm. In certain embodiments, the mean particle size of the glass particles ranges from about 0.1 mm to about 0.3 mm.

The term "particle size", as used herein, may refer to the particle diameter when the particle has a spherical shape. When the particle has a non-spherical shape, such as, for example, a filament shape or an elliptical shape, the term "particle size" may refer to the length of the particle in its largest dimension. The ratio between the length of the non-spherical particle in its largest dimension and in its smallest dimension may range from about 1:1 to about 1:5,000, such as, for example, from about 1:2 to about 1:1,000, from about 1:5 to about 1:500, or from about 1:10 to about 1:100. Alternatively, the term "particle size", when referring to a non-spherical particle, may refer to the diameter of an equivalent sphere that has the same volume as the non-spherical particle.

The term "mean particle size", as used herein, may refer to the mean particle size defined by a median diameter. The terms "median diameter" or "D50", that may be used interchangeably, refer to the particle diameter corresponding to 50% of the particles in a distribution curve in which particles are accumulated in the order of particle diameter from the smallest particle to the largest particle and wherein the particle size distribution is obtained on the volume basis and the total number of accumulated particles is 100%. In other words, D50 may refer to the particle diameter at 50% in the cumulative distribution of a sample of particles, wherein 50% of the particles in the sample are larger than D50, and 50% of the particles are smaller than D50.

The mean particle size may be measured by methods known to one of ordinary skill in the art. For example, the mean particle size may be measured with a particle size analyzer, e.g., by using a laser diffraction method or dynamic light scattering, or an image analysis method, e.g., by using a transmission electron microscope (TEM) or a scanning electron microscope (SEM) image. The image analysis method is particularly suitable for measuring mean particle sizes of non-spherical (e.g., elongated) particles. As an example of other measuring methods, the mean particle size may be measured using a centrifugal particle analyzer or may be estimated from a BET surface area analyzer.

Non-limiting examples of systems suitable for measuring the mean particle size by laser diffraction of particles include a Fritsch ANALYSETTE 22 NeXT Nano, a Fritsch ANALYSETTE 22 NeXT Micro, a Beckman Coulter LS 13 320 XR Particle Size Analyzer, a Malvern Panalytical Mastersizer 3000, a Malvern Panalytical Zetasizer Pro, a Malvern Panalytical NanoSight NS300, a HORIBA Partica LA-960V2, a Microtrac S3500, a Microtrac BLUEWAVE, a Sympatec HELOS, or the like. For example, ISO 13320:2020 describes the requirements for laser diffraction methods, as well as instrument qualification and size distribution measurement standards. Laser diffraction methods may determine the particle size distribution of spherical particles, and the spherical equivalent size distributions for non-spherical particles. A report from one of the above-mentioned laser diffraction analyzers may produce a frequency versus size distribution of particles which, when fitted with a curve, may determine the accumulate percentage versus size curve. The measurements or the fitted curve may determine, e.g., the 10^{th} percentile size (the inclusive size limit of the 10% smallest particles, D10), the 50^{th} percentile size (D50, median), and the 90^{th} percentile, D90. The particle size distribution depends on the basis of the distribution calculation, including, *inter alia,* number, surface, and volume basis. Unless stated otherwise, the term "D50" refers to the distribution by volume.

When non-spherical particle distributions are characterized, an image analysis method may be used to determine distributions of particle size and particle shape. For example, two-dimensional (2D) image analysis of particles can be performed using a Malvern Panalytical NanoSight NS300, a Fritsch ANALYSETTE 28 ImageSizer, a Microtrac SYNC, a Sympatec QIPIC, a Sympatec PICTOS, a HORIBA PSA300, or the like. For example, three-dimensional (3D) image analysis of particles may be performed with an electron tomography device. For example, a device for image analysis of particles may comply with "ISO 13322-1:2014 Particle size analysis - Image analysis methods - Part 1: Static image analysis methods" or "ISO 13322-2:2006 Particle size analysis - Image analysis methods - Part 2: Dynamic image analysis methods" depending on the analysis method used.

Without wishing to being bound by theory or mechanism of action, it is contemplated that a mean particle size of the glass particles that is lower than about 1 mm allows increasing the stability of the matrix before polyorganosiloxane undergoes crosslinking by preventing or decreasing phase separation between the silicone phase and the glass filler. In some embodiments, the mean particle size of the glass particles ranges from about 50 µm to about 500 µm. In certain embodiments, the mean particle size of the glass particles ranges from about 100 µm to about 300 µm. In some related embodiments, the glass particles have a spherical or a substantially spherical shape.

The glass particles may be monodispersed or polydispersed, i.e., having multimodal particle size distribution, such as, *inter alia,* a bimodal, trimodal, or quadromodal particle size distribution.

The glass particles may have a bulk density ranging from about 150 kg/m³ to about 600 kg/m³. In some embodiments, the glass particles have a bulk density ranging from about 200 to about 500 kg/m³. In certain embodiments, the glass particles have a bulk density of about 400 kg/m³.

The glass particles may be uniformly distributed throughout the silicone phase. The tern "uniformly distributed", as used herein, means that aggregates of particles are not formed and that the particles are not substantially concentrated in a particular portion of the silicone phase.

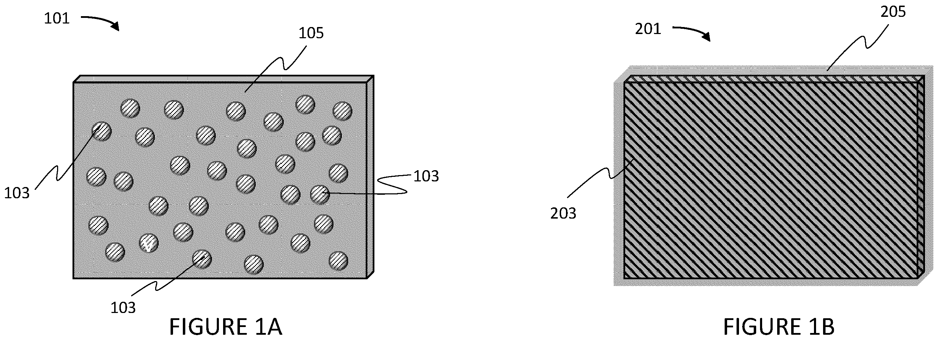

Reference is now made to Figure 1A, which schematically illustrates thermally insulating matrix 101 according to some embodiments of the invention. Thermally insulating matrix 101 includes a plurality of glass particles 103 that are uniformly distributed throughout silicone phase 105.

The glass particles may be encapsulated within a continuous silicone phase, wherein the pores within the glass particles may be free from the silicone phase (e.g., the pores may be filled with air).

The glass filler may be porous. The term "porous", as used herein, refers to a structure containing pores or voids that preferably are not interconnected. The term "porous" may further refer to the presence of pores or voids within the glass filler units, or to the presence of pores or voids between the glass filler units. For example, when the glass filler comprises discrete glass particles, they may have internal porosity. In some embodiments, the glass filler comprises expanded glass. Expanded glass may be manufactured by reforming crushed glass waste into spherical-aerated-granules. Non-limiting examples of suitable types of expanded glass include Extover^{®} and Granulight^{®}. The expanded glass particles may have fire extinguishing properties. Accordingly, when employing expanded glass particles, the thermally insulating matrix may further be used for extinguishing purposes or preventive fire protection, e.g., in the thermal runaway event.

The glass filler may have a porosity ranging from about 30% to about 90%. In some embodiments, the glass filler has a porosity ranging from about 50% to about 90%. In additional embodiments, the glass filler has a porosity ranging from about 40% to about 80%. In certain embodiments, the glass filler has a porosity of about 60%.

The glass particles may be in the form of a macrostructure in which said particles are clustered together, wherein said macrostructure is encapsulated within the silicone phase. The macrostructure may further be impregnated by the silicone phase. In other words, at least a portion of the silicone phase penetrates (or permeates) the macrostructure, e.g., by at least partially filling the voids (or pores) between the clustered glass particles.

Reference is now made to Figure 1B, which schematically illustrates thermally insulating matrix 201 according to some embodiments of the invention. Thermally insulating matrix 201 includes clustered glass particles 203 that are uniformly distributed throughout silicone phase 205.

In some embodiments, the glass fibers of the glass filler are present in the form of a glass wool. The term "glass wool", as used herein, refers to fibers, filaments, wires, threads or thread-like structures of glass in a porous and overlapping arrangement. The glass wool may contain a binder that allows to arrange the glass fibers into the glass wool texture and to preserve said arrangement at various ambient conditions and for extensive periods of time. The glass wool may be present in the thermally insulating matrix in the form of a sheet, textile, panel, or slab.

The glass wool may be woven or non-woven. In some exemplary embodiments, the glass wool is non-woven. The non-woven glass wool typically has a random orientation of fibers. The non-woven glass wool may be, e.g., wet laid or hot-pressed.

The glass wool is typically manufactured to include multiple voids between the glass fibers, wherein said voids are filled with trapped air. The glass wool may therefore be considered a porous material.

The thermally insulating matrix may accommodate glass wools with a wide range of thicknesses. For example, the glass wool may have a thickness ranging from about 0.5 mm to about 20 mm. In some embodiments, the glass wool has a thickness ranging from about 1 mm to about 10 mm. In certain embodiments, the glass wool has a thickness of about 5 mm.

The glass wool may be at least partially encapsulated by the silicone phase. In some embodiments, at least about 50% of the glass wool surface is covered by the silicone phase. In further embodiments, at least about 60%, 70%, 80%, or 90% of the glass wool surface is covered by the silicone phase.

In some embodiments, the glass wool is fully encapsulated by the silicone phase. For example, the glass wool may be in the form of a film having two essentially parallel surfaces and four sides and, in some embodiments, said two surfaces and four sides are covered by the silicone phase.

The bulk of the glass wool may also be at least partially filled by the silicone phase. In some embodiments, at least 10% of the glass wool bulk is filled by the silicone phase. In further embodiments, at least about 20%, 30%, 40% or 50%, of the glass wool bulk is filled by the silicone phase. In some embodiments, at least 10% of the glass wool pores are filled by the silicone phase. In further embodiments, at least about 20%, 30%, 40% or 50%, of the glass wool pores are filled by the silicone phase. The volume of the glass wool pores occupied by the silicone phase may be estimated by a computerized tomography (CT) scan combined with a dedicated software.

The glass wool may have a bulk density ranging from about 40 kg/m³ to about 150 kg/m³. In some embodiments, the glass wool has a density ranging from about from about 60 kg/m³ to about 120 kg/m³. In certain embodiments, the glass wool has a bulk density of about 90 kg/m³.

The glass filler may be present in the thermally insulating matrix in a weight percent of at least about 5 wt.%. In some embodiments, the glass filler is present in the thermally insulating matrix in a weight percent of at least about 10 wt.%. In further embodiments, the glass filler is present in the thermally insulating matrix in a weight percent of at least about 30 wt.%.

In certain embodiments, glass wool is present in the thermally insulating matrix in a weight percent of about 5-10 wt.%. In additional embodiments, expanded glass particles are present in the thermally insulating matrix in a weight percent of about 10-30 wt.%.

The term "silicone phase," as used herein, refers to a composition comprising more than one polymeric silicone compound or to a silicone polymer that is prepared from said composition. The silicone phase suitable for use in the thermally insulating matrix of the present invention comprises at least one silicone polymer. The term "silicone polymer," as used herein, refers to a polymer obtained from at least one monomer comprising at least one silicon atom. Non-limiting examples of silicone polymers include siloxane polymers and silane polymers. The term "siloxane polymer", as used herein, encompasses a polymer comprised of a backbone of repeating silicon and oxygen atoms, and which comprises one or more of monofunctional, difunctional, trifunctional or tetrafunctional siloxy (R₃Si-O-) units. The term "polyorganosiloxane", as used herein, refers to a siloxane polymer containing at least one organic (i.e., carbon-based) substituent on at least one silicon atom.

As mentioned hereinbelow, the silicone phase preparation involves the use of Component (A). Component (A) may be cured by chemical means, i.e., using a catalyst. Curing typically results in the formation of a fully or partially crosslinked silicone polymer. The terms "cured" or "curing", as used herein, refer to a process by which the silicone polymer becomes crosslinked. The terms "crosslinking" and "crosslinked", as used herein, encompass formation of covalent, electrostatic, hydrogen, and/or dynamic crosslinking bonds formed by a crosslinking agent between polymer chains of said at least one silicone polymer. The crosslinking may proceed through an addition reaction between the silicone polymer that can undergo crosslinking and a silicone polymer that can act as a crosslinking agent. For example, the silicone polymer that can undergo crosslinking may be a vinyl-functional siloxane polymer, and the silicone polymer that can act as a crosslinking agent may be a hydride-functional siloxane polymer, which siloxane polymers form a covalent ethyl bond upon reaction therebetween. Component (B), therefore, acts as a crosslinking agent that crosslinks the polyorganosiloxane that contains two silicon-bonded terminal alkenyl groups per molecule (Component (A)). The term "alkenyl", as used herein, refers to an aliphatic hydrocarbon group containing a carbon-carbon double bond, including straight-chain, branched-chain, and cyclic alkenyl groups. For example, the alkenyl group may have 2-6 carbon atoms.

The terminal alkenyl groups of Component (A) may be selected from a vinyl group, allyl group, 1-butenyl group, 1-hexenyl group, and a combination thereof. For example, the alkenyl group may be a vinyl group. In certain such embodiments, Component (A) comprises vinyl terminated polydimethylsiloxane, as depicted by Formula (1), 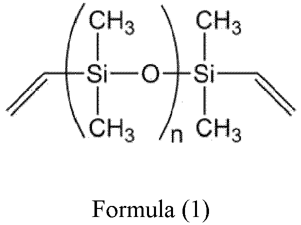 wherein n is an integer ranging between about 2 and 1,000.

Molecular weight and the kinematic viscosity of Component (A) may affect the flowability of the silicone phase before the crosslinking takes place. The term "molecular weight," as used herein, refers to the weight mean molecular weight.

The weight mean molecular weight of a silicone polymer may be determined using various analytical techniques, such as gel permeation chromatography (GPC) or mass spectrometry.

In GPC, the siloxane sample is dissolved in a suitable solvent and then passed through a column packed with porous beads of controlled pore size. The larger molecules in the sample are excluded from entering the pores and elute faster than the smaller molecules, allowing for separation by size. The eluted fractions are then detected and quantified using a suitable detector, such as a refractive index detector or a UV detector. The weight average molecular weight is calculated based on the elution profile of the sample.

In mass spectrometry, the sample is ionized and fragmented into smaller ions, which are then detected and analyzed based on their mass-to-charge ratio (m/z). By analyzing the ion fragmentation patterns, the molecular weight of the original sample can be determined.

The terms "viscosity" and "kinematic viscosity", that may be used herein interchangeably, refer to the absolute viscosity of a liquid divided by its density, both values measured at 25°C, wherein the absolute viscosity may be measured according to ASTM D7042 and the density may be measured according to ASTM D4052.

Preferably, Component (A) has a molecular weight that is below about 70,000 g/mole. It has been shown by the inventors that addition of a polyorganosiloxane containing two silicon-bonded terminal alkenyl groups per molecule which has a molecular weight above 70,000 g/mole, and specifically of about 72,000 g/mole, resulted in an inferior thermally conductive silicone composition in terms of at least one of flow rate and thermal conductivity.

In some embodiments, the molecular weight of Component (A) is below about 60,000 g/mole. In further embodiments, the molecular weight of Component (A) is below about 50,000 g/mole. In yet further embodiments, the molecular weight of Component (A) is below about 40,000 g/mole. In still further embodiments, the molecular weight of Component (A) is below about 30,000 g/mole.

Component (A) may have a molecular weight that is above about 5,000 g/mole. In some embodiments, Component (A) has a molecular weight that is above about 10,000 g/mole. In further embodiments, Component (A) has a molecular weight that is above about 15,000 g/mole. In yet further embodiments, Component (A) has a molecular weight that is above about 20,000 g/mole. In still further embodiments, Component (A) has a molecular weight that is above about 25,000 g/mole.

Component (A) may have a molecular weight that ranges from about 5,000 g/mole to about 70,000 g/mole. In some embodiments, Component (A) has a molecular weight that ranges from about 10,000 g/mole to about 60,000 g/mole. In further embodiments, Component (A) has a molecular weight that ranges from about 15,000 g/mole to about 50,000 g/mole. In yet further embodiments, Component (A) has a molecular weight that ranges from about 20,000 g/mole to about 40,000 g/mole. In still further embodiments, Component (A) has a molecular weight that ranges from about 25,000 g/mole to about 3 5,000 g/mole. In certain embodiments, Component (A) has a molecular weight that is about 28,000 g/mole.

Preferably, Component (A) has a kinematic viscosity that ranges from about 250 cSt to about 15,000 cSt. In some embodiments, Component (A) has a kinematic viscosity that ranges from about 250 cSt to about 10,000 cSt. In further embodiments, Component (A) has a kinematic viscosity that ranges from about 500 cSt to about 5,000 cSt. In yet further embodiments, Component (A) has a kinematic viscosity that ranges from about 750 cSt to about 2,000 cSt. In certain embodiments, Component (A) has a kinematic viscosity that is about 1,000 cSt.

Component (A) may contain a combination (i.e., more than one) of polyorganosiloxanes containing two silicon-bonded terminal alkenyl groups per molecule, which polyorganosiloxanes have different molecular weights and kinematic viscosities. In certain such embodiments, the molecular weights and the kinematic viscosities of each one of the polyorganosiloxanes containing two silicon-bonded terminal alkenyl groups per molecule should be as detailed hereinabove.

Component (A) may be present in a weight percent ranging from about 93 wt.% to about 98 wt.%, based on the total weight of the silicone phase. In some embodiments, Component (A) is present in a weight percent ranging from about 95 wt.% to about 98 wt.%, based on the total weight of the silicone phase. In certain embodiments, Component (A) is present in a weight percent of about 96.5 wt.%, based on the total weight of the silicone phase.

When referring to the total weight of the silicone phase, it is to be understood that it encompasses all the silicone-based materials of the thermally insulating matrix, as well as any additives known in the art, such as, *inter alia,* plasticizers, that may be added to the silicone phase to fine tune its properties, but that do not significantly affect the thermal insulation properties of the matrix.

In some embodiments, Component (B) is a trimethylsiloxane terminated (methylhydrosiloxane - dimethylsiloxane) copolymer, as depicted by Formula (2) 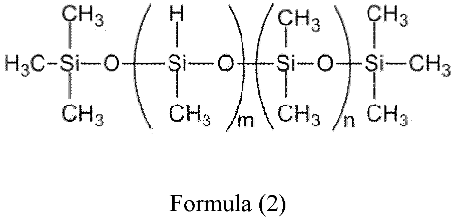 wherein m is an integer ranging between about 2 and 20, and n is an integer ranging between about 5 and 50.

Typically the silicone polymer that can act as a crosslinking agent (e.g., Component (B) of the silicone phase of the thermally insulating matrix of the present invention) has a lower molecular weight and/or a lower kinematic viscosity than the silicone polymer that can undergo crosslinking (e.g., Component (A) of the silicone phase).

Component (B) may have a molecular weight that ranges from about 500 g/mole to about 5000 g/mole. In some embodiments, Component (B) has a molecular weight ranging from about 750 g/mole to about 4000 g/mole. In further embodiments, the molecular weight of Component (B) ranges from about 1000 g/mole to about 3000 g/mole. In certain embodiments, the molecular weight of Component (B) ranges from about 1900 g/mole to about 2000 g/mole.

Component (B) may have a kinematic viscosity ranging from about 5 to about 200 cSt. In some embodiments, the kinematic viscosity of Composition (B) ranges from about 10 to about 100 cSt. In further embodiments, the kinematic viscosity of Composition (B) ranges from about 20 to about 50 cSt. In certain embodiments, the kinematic viscosity of Composition (B) ranges from about 25 to about 35 cSt.

Component (B) may contain a combination (i.e., more than one) of trimethylsiloxane terminated (methylhydrosiloxane - dimethylsiloxane) copolymers having different molecular weights and kinematic viscosities. In certain such embodiments, the molecular weights and the kinematic viscosities of each one of the trimethylsiloxane terminated (methylhydrosiloxane - dimethylsiloxane) copolymers should be as detailed hereinabove.

As the silicone phase is combined with the glass filler, the crosslinking reaction may affect the mixing of the silicone phase, that is liquid or gel, with the glass filler that is solid. For example, the crosslinking degree of the silicone phase that undergoes crosslinking may affect the extent of penetration of the silicone phase into the glass filler or distribution of the glass filler within the silicone phase. If the crosslinking degree is too high, the silicone phase may be too viscous to penetrate into the bulk of the glass filler or even to provide an efficient surface coverage thereof. Additionally, combining a silicone phase having a very high viscosity with discrete solid glass filler particles may result in an excessively rigid or even brittle matrix. Low viscosity, on the other hand (that may stem from insufficient crosslinking), may prevent full encapsulation of the glass filler by the silicone phase, may provide an extremely thin coating layer, or result in a mechanically unstable product. Furthermore, a silicone phase having a low viscosity may penetrate the glass filler and fill its pores to an extent that would decrease the thermal insulation efficiency of the matrix. When using discrete glass filler particles, insufficiently crosslinked silicone phase will not be rigid enough to maintain its form and keep the glass filler in place.

The relative amount of the methylhydrosiloxane monomers within the copolymer may determine the crosslinking degree of Component (A) by Component (B). Component (B) may comprise from about 15% to about 50% methylhydrosiloxane. In some embodiments, Component (B) comprises from about 25% to about 35% methylhydrosiloxane.

Furthermore, the crosslinking degree may be controlled by the relative concentration of Component (A) and Component (B) and/or by the ratio of silicon-bonded hydrogen atoms contained in Component (B) to alkenyl groups contained in Component (A). The number of silicon-bonded hydrogen atoms contained in Component (B) may be at least about 0.5 per alkenyl group contained in Component (A). In some embodiments, the number of silicon-bonded hydrogen atoms contained in Component (B) is at least about 1 per alkenyl group contained in Component (A). In further embodiments, the number of silicon-bonded hydrogen atoms contained in Component (B) is at least about 1.5 per alkenyl group contained in Component (A). In still further embodiments, the number of silicon-bonded hydrogen atoms contained in Component (B) is at least about 1.75 per alkenyl group contained in Component (A).

In some embodiments, the number of silicon-bonded hydrogen atoms contained in Component (B) ranges from about 0.5 to about 3 per alkenyl group contained in Component (A). In further embodiments, the number of silicon-bonded hydrogen atoms contained in Component (B) ranges from about 1 to about 3 per alkenyl group contained in Component (A). In still further embodiments, the number of silicon-bonded hydrogen atoms contained in Component (B) ranges from about 1.5 to about 2.5 per alkenyl group contained in Component (A). In yet further embodiments, the number of silicon-bonded hydrogen atoms contained in Component (B) ranges from about 1.75 to about 2.25 per alkenyl group contained in Component (A). In certain embodiments, the number of silicon-bonded hydrogen atoms contained in Composition (B) is about 2 per alkenyl group contained in Component (A).

Component (B) may be present in the thermally insulating matrix in a weight percent of at least about 1.75 wt.%, based on the total weight of the silicone phase. In some embodiments, Component (B) is present in a weight percent of at least about 2 wt.%, based on the total weight of the silicone phase. In further embodiments, Component (B) is present in a weight percent of at least about 2.5 wt.%, based on the total weight of the silicone phase.

In some embodiments, Component (B) is present in the thermally insulating matrix in a weight percent ranging from about 1.75 wt.% to about 7 wt.%, based on the total weight of the silicone phase. In further embodiments, Component (B) is present in a weight percent ranging from about 2 wt.% to about 5 wt.%, based on the total weight of the silicone phase. In yet further embodiments, Component (B) is present in a weight percent ranging from about 2.5 wt.% to about 4.5 wt.%, based on the total weight of the silicone phase. In certain embodiments, Component (B) is present in a weight percent of about 3.5 wt.%, based on the total weight of the silicone phase.

It has been surprisingly found by the inventors of the present invention that when using glass wool as the glass filler, at least about 2.5 wt.% of Component (B) is required in order to provide the desired level of penetration of the silicone phase into the glass wool while preserving the desired volume of unfilled pores, resulting in a high efficiency of thermal insulation, as expressed by passing a thermal runaway test, as detailed hereinbelow. In some embodiments, the weight percent of at least about 2.5 wt.% of Component (B) may correspond to the ratio between silicon-bonded hydrogen atoms contained in Component (B) and alkenyl group contained in Component (A) of at least about 1.5:1.

The weight ratio between Component (A) and Component (B) may range from about 13:1 to about 60:1. In some embodiments, the weight ratio between Component (A) and Component (B) ranges from about 20:1 to about 40:1. In certain embodiments, the weight ratio between Component (A) and Component (B) is about 30:1.

The crosslinking reaction between Component (A) and Component (B) may be initiated or catalyzed by a suitable catalyst. The silicone phase is therefore prepared by combining Component (A), Component (B) and a catalyst for a hydrosilylation reaction between Component (A) and Component (B). Hydrosilylation reaction catalysts are typically selected from platinum group metals or metal alloys, or from platinum group metal-containing compounds. Non-limiting examples of the platinum group metals include platinum (including platinum black), rhodium and palladium. The metals may be unsupported or supported on a substrate, such as, but not limited to, alumina, silica, or carbon.

The platinum group metal-containing compounds may be selected from platinum group metal coordination complexes, platinum group metal salts, such as platinum chloride, and platinum group metal acids, such as chloroplatinic acid, wherein the acid may be unsubstituted or substituted, e.g., by alcohol, or be in the form of a coordination complex, e.g., with an olefin or a vinyl group-containing siloxane.

Non-limiting examples of suitable platinum group metal coordination complexes include a rhodium-olefin complex and chlorotris(triphenylphosphine)rhodium (Wilkinson's catalyst). Non-limiting examples of suitable platinum group metal salts and acids include H₂PtCl₄, H₂PtCl₆, NaHPtCl₆, KHPtCl₆, Na₂PtCl₆, K₂PtCl₄, PtCl₄, PtCl₂, and NaHPtCl₄. A complex of a platinum group metal with a vinyl group-containing siloxane may be a platinum - 1,3-diethenyl-1,1,3,3-tetramethyldisiloxane complex.

The rate of the crosslinking reaction may affect the time during which the silicone phase may be mixed with the glass filler until the silicone phase gets too viscous or rigid due to crosslinking. When the silicone phase is combined with glass wool, the crosslinking rate may affect the extent of penetration of the silicone phase into the bulk of the glass filler. When the silicone phase is combined with discrete glass particles, the crosslinking rate may affect distribution of the glass filler within the silicone phase. For example, if the crosslinking is too fast, there will not be enough time to thoroughly mix the matrix ingredients and, if the crosslinking is too slow, there may be a phase separation between silicone phase and glass filler, resulting in a non-uniform distribution of the glass filler particles or fibers.

The silicone phase may contain from about 1 ppm to about 1000 ppm of the catalyst.

The rate of the crosslinking reaction may be controlled by the concentration of the catalyst. For example, the silicone phase may contain from about 1 ppm to about 200 ppm of the catalyst. In some embodiments, the silicone phase comprises from about 10 ppm to about 150 ppm of the catalyst. In further embodiments, the silicone phase comprises from about 50 ppm to about 100 ppm of the catalyst. In certain embodiments, the silicone phase comprises about 70 ppm of the catalyst. In some related embodiments, the catalyst may be the platinum - 1,3-diethenyl-1,1,3,3-tetramethyldisiloxane complex. In further related embodiments, the glass filler comprises glass wool.

It has been surprisingly found by the inventors of the present invention that when using glass wool as the glass filler, catalyst concentration of above 200 ppm prevented penetration of the silicone phase into the bulk of glass wool and the glass wool was not encapsulated. When using catalyst concentration below 200 ppm, the desired level of encapsulation and penetration was achieved, resulting in a high efficiency of thermal insulation.

The silicone phase may contain from about 0.5 ppm to about 50 ppm of platinum.

In certain embodiments, the silicone phase comprises below about 5 ppm of platinum. For example, platinum may be present in an amount ranging from about 0.5 ppm to about 5 ppm, based on the total weight of the silicone phase. In some related embodiments, the glass filler comprises glass wool.

It is to be understood that the weight percentages of Component (A), Component (B) and, optionally, the catalyst, as disclosed herein and in the claims, refer to the silicone phase before the crosslinking reaction between Component (A) and Component (B) takes place. It will be readily understood that following the crosslinking reaction the composition of the silicone phase will be different and the weight percentages of Component (A) and Component (B) will be different, since at least a portion of the combined Component (A) and Component (B) will react and a crosslinked polyorganosiloxane will be formed.

The rate of the crosslinking of Component (A) by Component (B) may be further controlled by addition of an inhibitor of the hydrosilylation reaction. The thermally conductive silicone composition may therefore be prepared by adding said inhibitor to a combination of Component (A), Component (B), and the catalyst. The inhibitor can be any material that inhibits the catalytic activity of the platinum group metal-based catalysts. The inhibitor may be selected from unsaturated hydrocarbon monoesters, unsaturated hydrocarbon diesters, ethylenically or aromatically unsaturated amides, acetylenic compounds, silylated acetylenic compounds, ethylenically unsaturated isocyanates, olefinic siloxanes, vinylcyclosiloxane, fumarate/alcohol mixtures, conjugated ene-ynes, hydroperoxides, nitrile, diaziridines, and any combination thereof. Non-limiting examples of suitable inhibitors include 1-ethynyl-1-cyclohexanol, 2-methyl-3-butyn-2-ol, 2-phenyl-3-butyn-2-ol, 2-ethynyl-isopropanol, 2-ethynyl-butane-2-ol, 3,5-dimethyl-1-hexyn-3-ol, trimethyl (3,5-dimethyl-1-hexyn-3-oxy)silane, dimethyl-bis-(3-methyl-1-butyn-oxy)silane, methylvinylbis(3-methyl-1-butyn-3-oxy)silane, ((1,1-dimethyl-2-propynyl)oxy)trimethylsilane, dimethyl maleate, diallyl maleate, diethyl fumarate, diallyl fumarate, bis-2-methoxy-1-methylethylmaleate, mono-octylmaleate, mono-isooctylmaleate, mono-allyl maleate, mono-methyl maleate, mono-ethyl fumarate, mono-allyl fumarate, 2-methoxy-1-methylethylmaleate, 2-isobutyl-1-butene-3-yne, 3,5-dimethyl-3-hexene-1-yne, 3-methyl-3-pentene-1-yne, 3-methyl-3-hexene-1-yne, 1-ethynylcyclohexene, 3-ethyl-3-butene-1-yne, 3-phenyl-3-butene-1-yne, and 1,3,5,7-tetramethyl-1,3,5,7-tetravinylcyclotetrasiloxane. For example, the inhibitor may be selected from dimethyl maleate, diallyl maleate, bis-2-methoxy-1-methylethylmaleate, 1-ethynyl-1-cyclohexanol, and 3,5-dimethyl-1-hexyn-3-ol. In certain embodiments, the inhibitor comprises dimethyl maleate.

The thermally insulating matrix may further include one or more additives, as known in the art. For example, the silicone phase may further include an inert silicone polymer. The term "inert silicone polymer", as used herein, refers to a silicone polymer that does not participate in the crosslinking reaction between Component (A) and Component (B), in any other crosslinking reaction or a curing process. The inert silicone polymer may include a trimethylsiloxy terminated polydimethylsiloxane. The inert silicone may act as a viscosity modifier, e.g., when added in an amount that is comparable to, or larger than, that of Component (A) and/or when its viscosity significantly differs from that of Component (A).

The trimethylsiloxy terminated polydimethylsiloxane may have a molecular weight ranging from about 5,000 g/mole to about 50,000 g/mole. In some embodiments, the molecular weight of the trimethylsiloxy terminated polydimethylsiloxane ranges from about 10,000 to about 20,000 g/mole. In further embodiments, the molecular weight of the trimethylsiloxy terminated polydimethylsiloxane ranges from about 12,000 g/mole to about 15,000 g/mole.

The kinematic viscosity of the trimethylsiloxy terminated polydimethylsiloxane may range from about 50 cSt to about 10,000 cSt. In some embodiments, the kinematic viscosity of the trimethylsiloxy terminated polydimethylsiloxane ranges from about 50 cSt to about 1,000 cSt. In further embodiments, the kinematic viscosity of the trimethylsiloxy terminated polydimethylsiloxane ranges from about 100 cSt to about 750 cSt. In yet further embodiments, the kinematic viscosity of the trimethylsiloxy terminated polydimethylsiloxane ranges from about 200 cSt to about 500 cSt.

Additional non-limiting examples of suitable additives include an adhesion promotion agent, such as an epoxy group-containing polysiloxane compound and/or an ester siloxane compound, a flame retarding agent, and a dyeing agent. Additionally, the thermally insulating matrix may include an inorganic additive to further reduce thermal conductivity of the matrix. Non-limiting examples of suitable inorganic additives include perlite, ceramic material, rock wool, calcium silicate, silica aerogel, graphite composite material, and phase change materials. The additives may be added as optional components in an amount that does not impair the thermal insulation and/or mechanical properties of the thermally insulating matrix of the present invention.

The silicone matrix may have a bulk density ranging from about 800 kg/m³ to about 1100 kg/m³. In some embodiments, the bulk density of the silicone phase ranges from about 900 kg/m³ to about 1000 kg/m³.

The thermally insulating matrix may contain at least about 50 wt.% of the silicone phase, based on the total weight of the matrix. In some embodiments, the thermally insulating matrix contains at least about 70 wt.% of the silicone phase, based on the total weight of the matrix. In further embodiments, the thermally insulating matrix contains at least about 90 wt.% of the silicone phase, based on the total weight of the matrix.

The term "silicone phase" may refer to the combination of Component (A), Component (B) and the catalyst prior to, or following, curing and crosslinking. The silicone phase following curing and crosslinking is also termed herein "cured silicone phase" or "crosslinked silicone phase". The term "thermally insulating matrix" refers to a matrix containing a cured or crosslinked silicone phase, unless stated otherwise.

The term "at least partially crosslinked", as used herein, refers in some embodiments, to a crosslinking degree of at least about 10%. In further embodiments, the term "at least partially crosslinked" refers to a crosslinking degree of at least about 20%, at least about 30%, at least about 40%, at least about 50%, at least about 60%, at least about 70%, at least about 80%, or at least about 90%. The term "crosslinking degree", as used herein, refers to the percentage of polymeric chains of Component (A) that are interconnected by Component (B), based on the total number of polymeric chains of Component (A) present within the thermally conductive silicone composition. The degree of crosslinking of Component (A) by Component (B) may be evaluated, for example, by gel permeation chromatography (GPC).

The silicone phase may have a thermal conductivity ranging from about 0.1 to about 0.2 W/mK.

The thermally insulating matrix may contain the silicone phase and the glass filler at a weight ratio ranging from about 2:1 to about 13:1. In some embodiments, the weight ratio between the silicone phase and the glass filler ranges from about 2:1 to about 5:1. In additional embodiments, the weight ratio between the silicone phase and the glass filler ranges from about 9:1 to about 13:1.

In some exemplary embodiments, the silicone phase is present in the thermally insulating matrix in a weight percent of at least about 90 wt.% and is prepared by combining: about 95 - 97 wt.% of Component (A); about 3-4 wt.% of Component (B); and about 50 to about 100 ppm of catalyst. In some related embodiments, the glass filler includes a non-woven glass wool.

The thermally insulating matrix may have a bulk density ranging from about 700 kg/m³ to about 1100 kg/m³. In some embodiments, the bulk density of the thermally insulating matrix ranges from about 700 kg/m³ to about 1100 kg/m³.

The silicone phase is prepared by combining Component (A), Component (B), and the catalyst. The thermally insulating matrix may be obtained by mixing the silicone phase and the glass filler. The components of the silicone phase and the glass filler may be mixed in multiple steps, in different portions and in various combinations.

Component (A) may be first mixed with Component (B) and the catalyst and then the obtained mixture may be combined with the glass filler. Optionally, a first portion of Component (A) may be mixed with Component (B), and then mixed with the catalyst that is dispersed or dissolved in a second portion of Component (A), wherein the obtained mixture is then combined with the glass filler.

The obtained mixture may be combined with the glass filler, for example, by adding the glass filler into the mixture and, optionally, mixing; immersing the glass filler in the mixture; pouring the mixture over the glass filler; placing the glass filler upon the mixture; brushing the mixture over the glass filler; or any combination thereof. In some embodiments, where the glass filler includes discrete glass particles, the glass filler is added to the mixture and mixed. In some embodiments, where the glass filler includes glass wool, the glass filler is immersed in the mixture and/or the mixture is poured over the glass filler.

The obtained mixture may be combined with the glass filler within no more than about 4 hours from the mixing of Component (A), Component (B), and the catalyst. In some embodiments, the obtained mixture is combined with the glass filler within less than about 3 hours from the mixing of Component (A), Component (B), and the catalyst. In further embodiments, the obtained mixture is combined with the glass filler within less than about 2 hours, within less than about 1 hour, within less than about 45 minutes, within less than about 30 minutes, or within less than about 10 minutes from the mixing of Component (A), Component (B), and the catalyst. Without wishing to being bound by theory or mechanism of action, it is contemplated that mixing the obtained mixture with the glass filler within the above indicated period may assist in forming a uniformly mixed glass filler and silicone phase. If the silicone phase does not undergo full or partial crosslinking within said time period, the silicone phase maintains its initial or close to initial flowability, allowing efficient mixing with the glass filler.

Alternatively, Component (A) may be first combined with Component (B), and the glass filler and then the obtained mixture may be mixed with the catalyst. The glass filler may be added in multiple portions, wherein each addition is followed by mixing. In another embodiment, Component (A) is first combined with the catalyst and the glass filler and then the obtained mixture is mixed with Component (B). Optionally, a first portion of Component (A) may be mixed with Component (B) and the glass filler, and then mixed with the catalyst that is dispersed or dissolved in a second portion of Component (A). Additionally, a first portion of Component (A) may be mixed with the catalyst and the glass filler, and then mixed with the Component (B) that is combined with a second portion of Component (A).

The mixing may be performed manually or automatically, e.g., using a mechanic stirrer or a mixer such as a planetary mixer or a kneader. The mixing may be performed at a temperature ranging from about 10°C to about 100°C. In some embodiments, the mixing is performed at a temperature ranging from about 10°C to about 80°C. In further embodiments, the mixing is performed at a temperature ranging from about 10°C to about 50°C. In still further embodiments, the mixing is performed at a temperature ranging from about 15°C to about 30°C. In certain embodiments, the mixing is performed at room temperature, e.g., at about 25°C.

The mixing may be performed at ambient pressure. Alternatively, the mixing may be performed at a pressure ranging from about 10 kPa to about 50 kPa. For example, the mixing may be performed at a pressure ranging from about 20 kPa to about 40 kPa.

The mixing of the components of the silicone phase may be performed for about 0.5 minutes to about 1 hour. In some embodiments, the mixing is performed for about 0.5 minutes to about 10 minutes.

Following the mixing of the silicone phase (or the components thereof) with the glass filler, the obtained mixture is cured. Curing may be performed with or without stirring. Preferably, during curing, the obtained mixture is left unagitated. Curing may continue for up to about 1000 hours, such as from about 1 hour to about 500 hours, from about 5 hours to about 200 hours, or from about 10 hours to about 100 hours.

Curing may be performed at a temperature ranging from about 10°C to about 100°C. In some embodiments, curing is performed at a temperature ranging from about 10°C to about 80°C. In further embodiments, curing is performed at a temperature ranging from about 10°C to about 50°C. In still further embodiments, curing is performed at a temperature ranging from about 15°C to about 30°C. In certain embodiments, curing is performed at room temperature, e.g., at about 25°C.

Curing may be performed under negative or positive pressure. In some embodiments, curing is performed under vacuum.

The thermally insulating matrix may be in any form suitable for use in thermal insulation applications. In some embodiments, the thermally insulating matrix is in the form of a thermal barrier. The term "thermal barrier", as used herein, refers to a layer that acts as a thermal insulator, preventing or decreasing the transfer of heat from a component of a device to a nearby component, structure, or material. Such thermal barrier may be placed, *inter alia,* between cells or modules of an electrochemical energy generation and/or storage device to prevent or diminish thermal runaway phenomenon.

For example, the thermally insulating matrix may have a flat rectangular shape. In order to form such rectangular matrix, a mold with the desired shape may be used. The silicone phase mixed with the glass filler may be added to said mold. Alternatively, the glass filler may be first placed into the mold and then the silicone phase may be added to the mold, covering the glass filler. Furthermore, a first portion of the silicone phase may be added to the mold, followed by the addition of the glass filler, after which a second portion of the silicone phase may be added to the mold. The mold having a rectangular shape may be a horizontal or vertical mold. For example, when using glass wool as the glass filler and a horizonal mold, the silicone phase may be added to cover at least one surface of the glass wool, so that it can spread perpendicularly to a longitudinal axis of the glass wool and of the mold under gravitational force, preferably penetrating to the opposite surface of the glass wool. Alternatively, when using the glass wool and a vertical mold, the silicone phase may be added to contact at least one edge of the glass wool, so that it can spread along the longitudinal axis of the glass wool and of the mold under gravitational force, preferably penetrating to the opposite edge of the glass wool. Spreading of the silicone phase throughout the glass wool may be assisted by negative or positive pressure.

After adding all the components of the thermally insulating matrix to the mold, the matrix may be cured within the mold. In some embodiments, the mold containing the thermally insulating matrix components is held under vacuum during curing.

The thermally insulating matrix may be in the form of a substantially rigid sheet. The term "substantially rigid", as used herein, refers to the ability of a component to generally avoid substantial deformation under normal usage.

The thermally insulating matrix may have a thickness ranging from about 0.05 to about 25 mm. In further embodiments, the matrix thickness ranges from about 0.1 mm to about 0.5 mm. In additional embodiments, the thickness ranges from about 1 mm to about 15 mm. In further embodiments, the thickness ranges from about 5 mm to about 10 mm.

In some embodiments, the silicone phase forms a layer on the surface of the glass wool that has a thickness ranging from about 0.1 mm to about 10 mm. In further embodiments, the thickness ranges from about 0.5 mm to about 5 mm. In further embodiments, the thickness ranges from about 1 mm to about 3 mm.

In some further aspects and embodiments of the invention, there is provided an electrochemical energy generation or storage device comprising the thermally insulating matrix as described hereinabove. In some embodiments, at least one surface of said matrix contacts at least one battery cell such as, e.g., a lithium-ion battery cell. The term "contact", as used herein, is meant to encompass both a direct contact and an indirect contact, e.g., through another thermal barrier or heat dissipation element. The thermally insulating matrix may be disposed between two neighboring battery cells, providing a thermal barrier therebetween. Said thermal barrier may assist in the thermal balance control of a battery module, as well as in mitigating thermal runaway. Owing to its high mechanical stability, the thermally insulating matrix according to the various embodiments of the present invention may be used in a large-size battery module, where battery cells may be compressed.

As used herein and in the appended claims, the singular forms "a", "an", and "the" include plural references, unless the content clearly dictates otherwise. Thus, for example, reference to "additive" includes a plurality of such additives and equivalents thereof known to those skilled in the art, and so forth. It should be noted that the term "and" or the term "or" is generally employed in its sense including "and/or", unless the content clearly dictates otherwise.

As used herein, the term "about", when referring to a measurable value such as an amount, a temporal duration, and the like, is meant to encompass variations of +/-10%, more preferably +/-5%, even more preferably +/-1%, and still more preferably +/-0.1% from the specified value.

The following examples are presented in order to more fully illustrate some embodiments of the invention. They should in no way be construed, however, as limiting the broad scope of the invention. One skilled in the art can readily devise many variations and modifications of the principles disclosed herein without departing from the scope of the invention.

### Examples

### Example 1 - materials used in the preparation of the thermally insulating matrix

Table 1 summarizes the materials used for the preparation of the silicone phase of the thermally insulating matrix.

**Table 1**

| | Material name | Composition | Mw (g/mole) | Kinematic viscosity (c St) |
|---|---|---|---|---|
| Component (A) | Vinyl terminated polydimethylsiloxane | | 28,000 | 1,000 |
| Component (B) | (25-35% methylhydrosiloxane) - dimethylsiloxane copolymer, trimethylsiloxane terminated | | 1,900-2,000 | 25-35 |
| Catalyst solution | Platinum-divinyltetramethyldisiloxane complex | >90% vinyl terminated polydimethylsiloxane | 47468 | |
| | | <10% platinum, 1,3-diethenyl-1,1,3,3-tetramethyldisiloxane complexes | | |
| Inert silicone | Polydimethylsiloxane, trimethylsiloxy terminated | | 13,650 | 350 |

Table 2 summarizes the materials used for the preparation of the silicone phase of the thermally insulating matrix.

**Table 2**

| | Main component | Mean particle size (mm) | Bulk density (kg/m³) | Porosity (%) | Thermal conductivity (W/(m·K)) | Specific thermal capacity (kJ/(kg·K)) |
|---|---|---|---|---|---|---|
| Expanded glass particles type 1* | Silicon dioxide | 0.1-0.3 | 400 | 60 | | 0.6-0.8 |
| Expanded glass particles type 2** | Silicon dioxide | 1-4 | 200 | 85 | 0.07 | 0.6-0.8 |
| Non-woven glass wool | Silicon dioxide | | 90 | NA | 0.0035 | |

| | | | | | | |
|---|---|---|---|---|---|---|
| * Expanded glass particles type 1 are also termed herein "small glass particles" ** Expanded glass particles type 2 are also termed herein "large glass particles" | | | | | | |

### Example 2 - preparation of thermally insulating matrices containing expanded glass particles

**Table 3**

| Formulation # | Component (A) (g) | Component (B) (g) | Catalyst (g) | Inert silicone (g) | Expanded glass particles type 1 (g) | Expanded glass particles type 2 (g) | Curing time (h) | Curing temperature (°C) |
|---|---|---|---|---|---|---|---|---|
| #1 | 38.057 | 0.908 | 0.027 | 39.008 | 0 | 19 | ~120 | 25 (RT) |
| #2 | 38.057 | 0.908 | 0.027 | 39.008 | 19 | 0 | ~120 | 25 (RT) |
| #3 | 38.057 | 0.908 | 0.027 | 39.008 | 32 | 0 | ~120 | 25 (RT) |
| #4 | 38.057 | 0.908 | 0.027 | 39.008 | 11 | | ~120 | 25 (RT) |
| #5 | 38.057 | 0.908 | 0.027 | 39.008 | 6 | 2.3 | ~120 | 25 (RT) |
| #6 | 38.206 | 0.922 | 0.057 | 39.216 | 19 | 0 | 72 | 25 (RT) |
| #7 | 19102 | 0.461 | 0.029 | 19.610 | 20 | 0 | 72 | 25 (RT) |
| #8 | 37459 | 0.448 | 0.0567 | 37.970 | 19 | 0 | 72 | 25 (RT) |
| #9 | 37.459 | 0.448 | 0.0567 | 37.970 | 50 | 0 | 72 | 25 (RT) |
| #10 | 76.453 | 1.843 | 0.014 | 0 | 53 | 0 | 72 | 25 (RT) |
| | | | | | | | 200 | 60 |
| #11 | 22.963 | 0.553 | 0.004 | 0 | 12 | 0 | 72 | 25 (RT) |
| | | | | | | | 200 | 60 |
| #12 | 28.962 | 0.696 | 0.0021 | 0 | 19.75 | 0 | 72 | 25 (RT) |
| #13 | 34.528 | 0.829 | 0.0025 | 0 | 17.68 | 0 | 72 | 25 (RT) |

Formulations 1-13 were prepared according to the following procedure:

Each one of Component (B) and the catalyst solution were individually mixed with a portion of Component (A) and, optionally, with a portion of the inert silicone, to obtain two separate mixtures and then these two separate mixtures were mixed manually or with an electric stirrer for 30 seconds. The glass filler was then added to the mixture and the obtained mixture was mixed for an additional 30 seconds. Following mixing, the mixture was poured into a rectangular mold and cured by leaving the mixture in the mold without stirring for a time period and at a temperature disclosed in Table 3. The formulations were used in accordance with Table 3 to obtain the desired amount of Component (A), Component (B), the catalyst and, optionally, the inert silicone.

### Formulations 1-13 were prepared and the effect of various parameters on the obtained matrix was evaluated.

Formulations 1-5 were designed to test the effect of the glass filler content and particle size, wherein Formulation 1 contained 20 wt.% of the large glass particles, Formulation 2 contained 20 wt.% of the small glass particles, Formulation 3 contained 30 wt.% of the small glass particles, Formulation 4 contained 12.5 wt.% of the small glass particles and Formulation 5 contained 30 wt.% of a combination of the small glass particles and large glass particles. It was found that, due to a slow curing process, there was a phase separation between the silicone phase and the glass particles, regardless of the particle size of the glass filler.

Formulations 6 and 7 were designed to test the effect of the amount of the catalyst, which was higher than in Formulations 1-5. Only small glass particles were used in these formulations to try to avoid or reduce phase separation. Curing of Formulations 6 and 7 was faster than that of Formulations 1-5, which resulted in the appearance of bubbles within the cured matrix.

Formulations 8 and 9 were designed to test the effect of the amount of the crosslinker (Component (B)). Only small glass particles were used in these formulations. The resultant matrix had a very soft rubber structure, wherein Formulation 8 (with 20 wt.% glass particles) had a lower hardness rating (as measured by ASTM-D2240, Shore 000 indenter) than Formulation 9 (with 40 wt.% glass particles). It was also found that increasing the concentration of the glass particles reduces adhesiveness of the resultant matrix. Decreasing the amount of the crosslinker was found to decrease hardness and increase elasticity of the cured matrix.

Formulations 10 - 13 were designed to test the effect of the amount of the catalyst, which was lower than in the previous formulations. The lower amount of catalyst was supposed to prolong the crosslinking time, thereby allowing more time for forming of the matrix into the desired shape. Also, Formulations 10 - 13 did not include the inert silicone that may modify viscosity of the formulation before or after curing. It was found that when the curing time was longer, bubbles which appeared during mixing of the matrix had more time to disappear. Additionally, a slower curing process provided a longer period during which the matrix had high flowability, thereby affording higher manufacturing flexibility. Curing rate (as identified by a visual inspection of the samples) of Formulations 10-11 was higher than that of Formulations 12-13 due to a relatively lower amount of catalyst. Additionally, Formulation 10 included a relatively higher concentration of glass particles (40 wt.%) than Formulation 11 (33 wt.%), while having the same catalyst concentration; and Formulation 12 (40 wt.%) included a relatively higher concentration of glass particles than Formulation 13 (33 wt.%), while having the same catalyst concentration. Flowability of Formulation 11 was found to be higher than that of Formulation 10 and flowability of Formulation 13 was higher than that of Formulation 12. It was further found that the increase in the concentration of the glass particles led to the increase of matrix hardness, while the catalyst concentration did not affect hardness.

### Example 3 - preparation of thermally insulating matrices containing glass wool

**Table 4**

| Formulation # | Component (A) (g) | Component (B) (g) | Catalyst (g) | Non-woven glass wool (g) | Non-woven glass wool size (mm³) | Curing time (h) | Curing temperature (°C) |
|---|---|---|---|---|---|---|---|
| #14 | 195.29 | 4.6984 | 0.1349 | NA | 386*196*8 | 72h | RT (25) |
| #15 | 976.43 | 35.22 | 0.2103 | NA | 386*196*8 | 72h | RT (25) |
| #16 | 781.12 | 28.1 | 0.0563 | NA | 386*196*8 | 72h | RT (25) |
| #17 | 560.03 | 1992 | 0.0388 | 52.22 | 386*196*8 | 72h | RT (25) |
| #18 | 560.59 | 1993 | 0.041 | 51.74 | 386*196*8 | 72h | RT (25) |
| #19 | 560.07 | 1993 | 0.044 | 52.88 | 386*196*8 | 72h | RT (25) |
| #20 | 579.42 | 20.69 | 0.040 | NA | 386*196*8 | 72h | RT(25) |
| #21 | 530.87 | 18.89 | 0.038 | NA | 386*196*8 | 72h | RT(25) |

Formulations 14 (your ref 16.1) -21 (your ref 16.5) were prepared according to the following procedure:
Each one of Component (B) and the catalyst solution were individually diluted with a portion of Component (A) and mixed manually or with an electric stirrer. The diluted mixtures were used in accordance with Table 4 to obtain the desired amount of Component (A), Component (B), and the catalyst. The diluted mixtures were combined, poured into a rectangular mold containing the glass wool and cured by leaving the mixture in the mold without stirring for a time period and at a temperature disclosed in Table 4.

Formulations 14-16 were designed to test the effect of the amount of the catalyst and the crosslinker (Component B) on the resultant matrix that contained glass wool as the glass filler. Formulation 14 had the highest amount of catalyst and the lowest concentration of crosslinker. Formulation 15 had a higher crosslinker concentration than Formulation 14, but a lower catalyst concentration. Formulation 16 had the same crosslinker concentration as Formulation 15, and the lowest catalyst concentration.

When using higher catalyst concentrations (Formulations 14 and 15), the silicone phase did not penetrate the glass wool and did not cover the glass wool from both sides. Vacuum assisted addition of the silicone phase and vertical mold formation method that were implemented when curing Formulation 15 did not improve silicone phase penetration through the glass wool. Decreasing the catalyst concentration (Formulation 16) enabled partial penetration of the silicone phase and resulted in a fully encapsulated glass wool (i.e., both sides of the glass wool were covered by the silicone phase). Additionally, the matrix obtained after Formulation 14 was cured was insufficiently hard. Increasing the crosslinker concentration (Formulations 15 and 16) provided cured matrices with a higher hardness. Accordingly, the best formulation in terms of its physical and mechanical properties was found to be Formulation 16.

Formulations 17-21 are duplicates of Formulation 16.

### Example 4 - Thermal properties of the thermally insulating matrices

Various tests were performed to evaluate thermal properties of some of the cured matrices prepared as described in Examples 2 and 3 and having the composition identical to that of Formulations 12, 13 and 16.

### Thermal runaway simulation plate test

A comparative thermal experiment was performed using a plate that simulates a TR cell. In this experiment the heat is transferred by conduction, therefore the test sample, i.e., the cured matrix prepared as described in Example 3 and having the composition identical to that of Formulation 16, and an FR-4 plate that was used as a reference, was attached to the plate and a weight was placed on top. The test was conducted as follows:

A first thermocouple was placed on the plate. Then, an aluminum foil was used to coat the plate and a second thermocouple was placed on the aluminum foil. A third thermocouple was placed on the side of the test sample that is configured to rest directly on the plate and be heated and a fourth thermocouple was placed on the opposite (unheated) side of the test sample. The test matrix was then placed on the plate. Endothermic Mat (E-5A-4, 3M) sheet was placed on the tested insulating material. A battery was simulated by placing a weight of 2.1 kg on top of the endothermic mat sheet. The test was performed for 10 minutes at a temperature of 250°C.

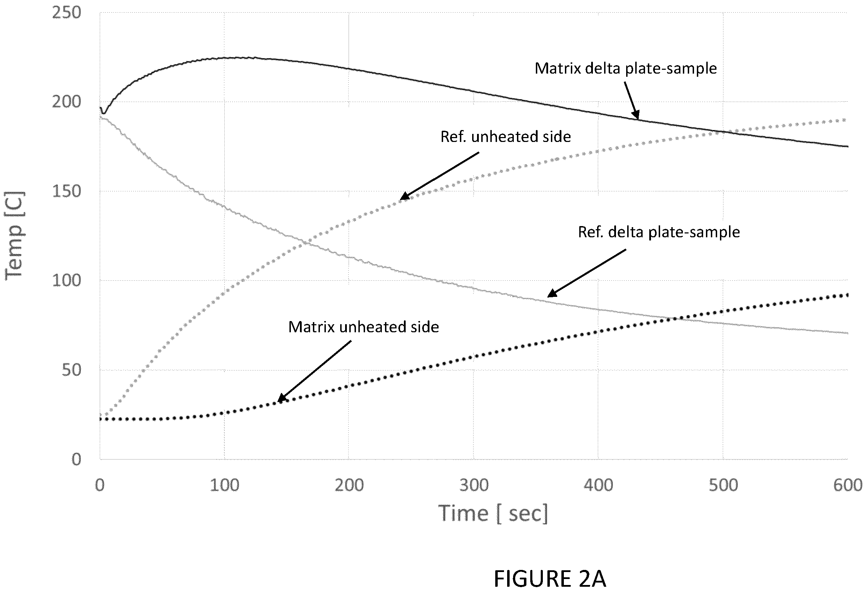

Figure 2A presents a graph of the temperatures measured in the plate test as a function of time. It can be seen that heat transport through the thermally insulating matrix of Formulation 16 is lower than through the commonly used thermal barrier FR-4 as, even after 10 minutes, the temperature of the unheated side of the matrix (curve "Matrix unheated side") is significantly lower than the temperature of the heated side (curve "Matrix delta plate-sample"), while, when using the FR-4 plate, the temperature of the unheated side (curve "Ref. unheated side") becomes higher than that of the heated side (curve "Ref. delta plate-sample") already after 3 minutes of heating. Additionally, the difference of the temperature between the plate and the unheated side of the matrix is lower compared to the FR-4 plate.

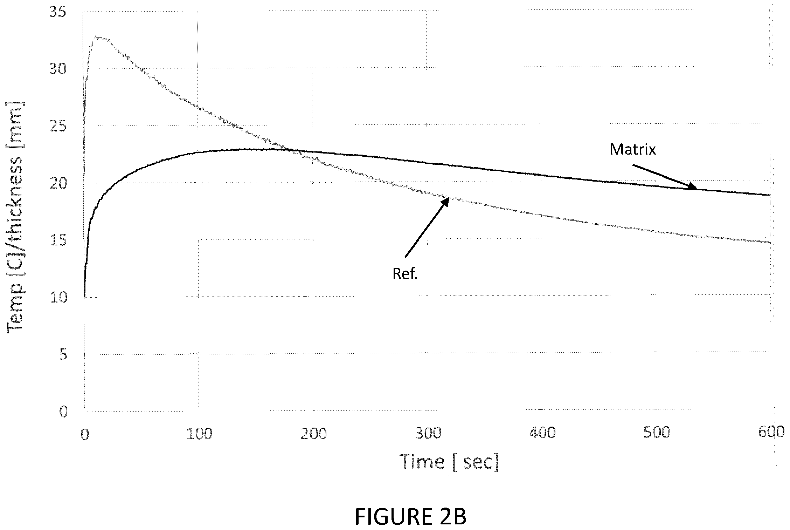

Figure 2B shows a graph of the difference in the temperature of two sides of the test sample (curve "Matrix") and of the FR-4 plate (curve "Ref"), wherein the difference in temperature is normalized by the thickness of the corresponding sample. It can be seen that heat conductance through the cured matrix according to an embodiment of the present invention is significantly lower than through the FR-4 plate as the temperature difference between two sides of the matrix remains relatively stable after the initial rise due to heating, while in the FR-4 plate there is a decline in the temperature difference between two sides, meaning that heat is transferred through the plate.

### Thermal conductivity test

The thermal conductivity test was performed with a Hot Disk instrument per ISO 22007-2. This is a Transient plane source (TPS) method for thermal conductivity based on the use of a transiently heated plane sensor, and is in its most common adaptation referred to as the Hot Disk Thermal Constants Analyser. The Hot Disk sensor consists of an electrically conducting pattern in the shape of a double spiral, which has been etched out of a thin metal (nickel) foil. This spiral is sandwiched between two thin sheets of an insulating material.

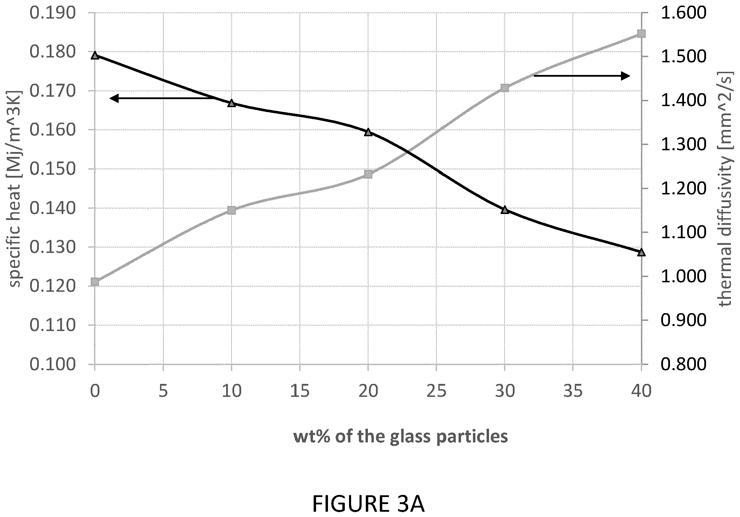

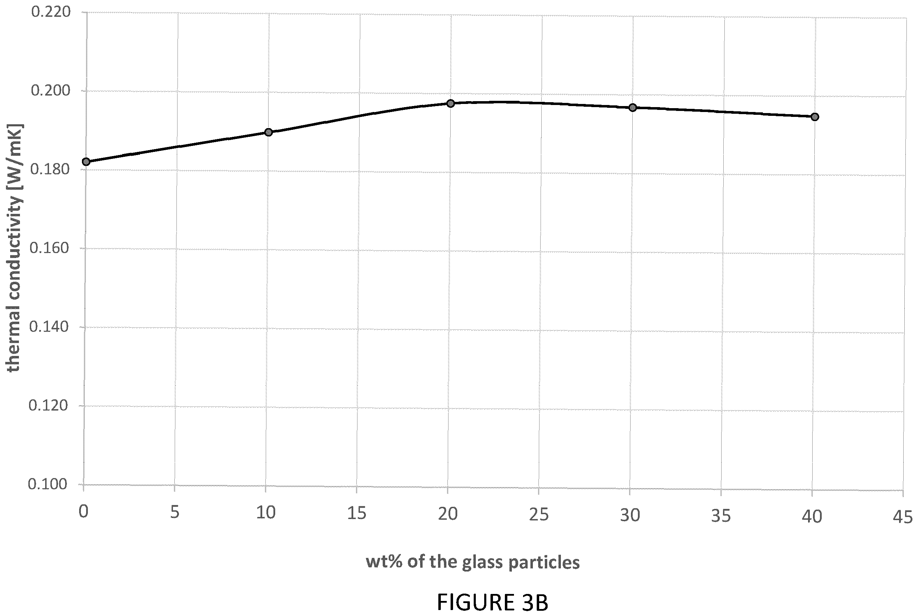

The thermally insulating matrix according to some embodiments of the present invention may also serve as a fire retarding material, when expanded glass particles are used as the glass filler, without compromising heat insulation efficiency of the matrix. The thermal conductivity test was performed to evaluate the effect of the content of expanded glass particles on thermal conductivity, wherein the composition of the silicone phase of Formulations 12 and 13 was used to prepare the cured matrix with different concentrations of the glass particles, including 0, 10, 20, 30, and 40 %wt. It can be seen from Figure 3A that thermal diffusivity, i.e., the rate of transfer of heat of the material from its hot end to its cold end, increases with an increase in the content of glass particles, while specific heat of the matrix decreases. Thermal conductivity, which is a measure of the ability of the cured matrix to conduct heat, is therefore not dependent on the concentration of the glass particles within the matrix (Figure 3B).

### Thermal runaway test

The thermal runaway test was performed in accordance with UL-9540A test method with the cured thermally insulating matrix of Formulation 16. The thermal runaway test was designed to test fire propagation from a middle lithium-ion battery cell disposed in a vertical stack of 11 cells, wherein the five cells disposed in the middle of the stack are high energy type Li battery pouch cells and the remaining six cells disposed on the sides of the stack (three cells on each side) are dummy cells. The Li battery cells were NMC-based, 103 Ah, 216 Wh/kg and 526 Wh/L cells. One sheet of the cured thermally insulating matrix having a thickness of about 8-9 mm was disposed between each two adjacent cells. The stack protected by outer FR-4 plates contacting the outermost cells and 2mm FR4 rear shield was placed in a 41L enclosure. Two thermocouples were attached to each side of the Li battery cells and the temperature was recorded throughout the test. The middle cell (cell 6) was a TR-initiator cell with a heating rate of about 6°C/min. The test was conducted for 100 minutes.

Following the test, the stack was disassembled and each cell was visually inspected. It was found that, while the middle cell got burned, the cells contacting the middle cell (i.e., cells 5 and 7) were undamaged. The thermally insulating matrix sheets contacting the middle cell showed some changes in visual appearance, but no damage to their structure or integrity was observed.

Temperature data analysis showed that, while the temperature of the middle cell reached 635.7°C at the peak, the maximum temperature of cells 5 and 7 was only 205.9°C and 207.1°C, respectively. It can therefore be concluded that the thermally insulating matrix according to the principles of the present invention prevents spreading of fire outside of the battery stack in a thermal runaway event by efficiently thermally insulating neighboring cells, thereby preventing thermal runaway propagation therebetween.

Following are clauses that describe the aspects of the disclosure:
Clause 1. A thermally insulating matrix comprising:
   a silicone phase prepared by combining:
      Component (A) - a polyorganosiloxane containing two silicon-bonded terminal alkenyl groups per molecule and having a molecular weight ranging from about 15,000 g/mole to about 70,000 g/mole and a kinematic viscosity ranging from about 250 cSt to about 15,000 cSt at 25°C;
      Component (B) - trimethylsiloxane terminated (methylhydrosiloxane - dimethylsiloxane) copolymer comprising from about 15% to about 50% methylhydrosiloxane; and
      a catalyst for a hydrosilylation reaction between Component (A) and Component (B), and
   a glass filler having a thermal conductivity of less than about 0.1 W/mK,
   wherein the matrix comprises at least about 50 wt.% of the silicone phase, based on the total weight of the matrix.
Clause 2. The thermally insulating matrix of clause 1, wherein the catalyst comprises a platinum group metal or a platinum group metal-containing compound.
Clause 3. The thermally insulating matrix of clause 1 or clause 2, wherein the catalyst is selected from the group consisting of platinum, rhodium, palladium, platinum chloride, chloroplatinic acid, and salts and complexes thereof.
Clause 4. The thermally insulating matrix of clause 3, wherein the catalyst comprises a platinum - 1,3-diethenyl-1,1,3,3-tetramethyldisiloxane complex.
Clause 5. The thermally insulating matrix of any one of clauses 1 to 4, wherein the catalyst is present in an amount of up to about 200 ppm, based on the total weight of the silicone phase.
Clause 6. The thermally insulating matrix of clause 5, wherein the catalyst is present in an amount ranging from about 1 ppm to about 200 ppm, based on the total weight of the silicone phase.
Clause 7. The thermally insulating matrix of clause 5 or clause 6, wherein the catalyst is present in an amount of about 70 ppm, based on the total weight of the silicone phase.
Clause 8. The thermally insulating matrix of any one of clauses 1 to 7, wherein Component (B) comprises from about 25% to about 35% methylhydrosiloxane.
Clause 9. The thermally insulating matrix of any one of clauses 1 to 8, wherein Component (B) has a molecular weight ranging from about 500 g/mole to about 5000 g/mole.
Clause 10. The thermally insulating matrix of clause 9, wherein the molecular weight of Component (B) ranges from about 1000 g/mole to about 3000 g/mole.
Clause 11. The thermally insulating matrix of any one of clauses 1 to 10, wherein Component (B) has a kinematic viscosity ranging from about 5 cSt to about 200 cSt.
Clause 12. The thermally insulating matrix of clause 11, wherein the kinematic viscosity of Component (B) ranges from about 20 cSt to about 50 cSt.
Clause 13. The thermally insulating matrix of any one of clauses 1 to 12, wherein the number of silicon-bonded hydrogen atoms contained in Component (B) ranges from about 1 to about 3 per alkenyl group contained in Component (A).
Clause 14. The thermally insulating matrix of any one of clauses 1 to 13, wherein the number of silicon-bonded hydrogen atoms contained in Component (B) is at least about 1.5 per alkenyl group contained in component (A).
Clause 15. The thermally insulating matrix of clause 14, wherein the number of silicon-bonded hydrogen atoms contained in Component (B) is about 2 per alkenyl group contained in component (A).
Clause 16. The thermally insulating matrix of any one of clauses 1 to 15, wherein Component (B) is present in a weight percent ranging from about 2.5 wt.% to about 7 wt.%, based on the total weight of the silicone phase.
Clause 17. The thermally insulating matrix of clause 16, wherein Component (B) is present in a weight percent of about 3.5 wt.%, based on the total weight of the silicone phase.
Clause 18. The thermally insulating matrix of any one of clauses 1 to 17, wherein the alkenyl groups are selected from the group consisting of a vinyl group, allyl group, 1-butenyl group, 1-hexenyl group, and a combination thereof.
Clause 19. The thermally insulating matrix of any one of clauses 1 to 18, wherein Component (A) comprises vinyl terminated polydimethylsiloxane.
Clause 20. The thermally insulating matrix of any one of clauses 1 to 19, wherein the molecular weight of Component (A) ranges from about 15,000 g/mole to about 50,000 g/mole.
Clause 21. The thermally insulating matrix of clause 20, wherein the molecular weight of Component (A) ranges from about 25,000 g/mole to about 35,000 g/mole.
Clause 22. The thermally insulating matrix of any one of clauses 1 to 21, wherein the kinematic viscosity of Component (A) ranges from about 500 cSt to about 2,000 cSt at 25°C.
Clause 23. The thermally insulating matrix of any one of clauses 1 to 22, wherein Component (A) is present in a weight percent of up to about 98 wt.%, based on the total weight of the silicone phase.
Clause 24. The thermally insulating matrix of clause 23, wherein Component (A) is present in a weight percent ranging from about 93 wt.% to about 98 wt.%, based on the total weight of the silicone phase.
Clause 25. The thermally conductive silicone composition of clause 23 or clause 24, wherein Component (A) is present in a weight percent of about 96.5 wt.%, based on the total weight of the silicone phase.
Clause 26. The thermally insulating matrix of any one of clauses 1 to 25, wherein the weight ratio between Component (A) and Component (B) ranges from about 40:1 to about 13:1.
Clause 27. The thermally insulating matrix of any one of clauses 1 to 26, wherein the glass filler comprises glass particles.
Clause 28. The thermally insulating matrix of clause 27, wherein the glass particles are selected from the group consisting of spherical particles, substantially spherical particles, beads, fibers, filaments, needles, threads, wires, tubes, rods, pillars, and any combination thereof.
Clause 29. The thermally insulating matrix of clause 27 or clause 28, wherein the glass filler comprises glass fibers.
Clause 30. The thermally insulating matrix of clause 29, wherein the glass fibers are in the form of comprise a glass wool.
Clause 31. The thermally insulating matrix of clause 30, wherein the glass wool is non-woven.
Clause 32. The thermally insulating matrix of clause 30 or clause 31, wherein the glass wool has a bulk density ranging from about 40 kg/m3 to about 150 kg/m3.
Clause 33. The thermally insulating matrix of clause 32, wherein the glass wool has a bulk density of about 90 kg/m3.
Clause 34. The thermally insulating matrix of any one of clauses 30 to 33, wherein the glass wool has a thickness ranging from about 0.5 mm to about 20 mm.
Clause 35. The thermally insulating matrix of clause 34, wherein the glass wool has a thickness of about 5 mm.
Clause 36. The thermally insulating matrix of any one of clauses 30 to 35, wherein the glass wool is fully encapsulated by the silicone phase.
Clause 37. The thermally insulating matrix of any one of clauses 1 to 29, wherein the glass filler comprises discrete glass particles.
Clause 38. The thermally insulating matrix of clause 37, wherein the glass particles have a porosity ranging from about 30% to about 90%.
Clause 39. The thermally insulating matrix of clause 38, wherein the glass particles have a porosity of about 60%.
Clause 40. The thermally insulating matrix of clause 38 or clause 39, wherein the glass particles have a bulk density ranging from about 150 kg/m3 to about 600 kg/m3.
Clause 41. The thermally insulating matrix of clause 40, wherein the glass particles have a bulk density of about 400 kg/m3.
Clause 42. The thermally insulating matrix of any one of clauses 37 to 41, wherein the glass particles have a mean particle size ranging from about 0.05 mm to about 1 mm.
Clause 43. The thermally insulating matrix of clause 42, wherein the glass particles have a mean particle size ranging from about 0.1 mm to about 0.3 mm.
Clause 44. The thermally insulating matrix of any one of clauses 37 to 44, wherein the glass particles have an essentially spherical shape.
Clause 45. The thermally insulating matrix of any one of clauses 37 to 44, wherein the glass particles are uniformly distributed throughout the silicone phase.
Clause 46. The thermally insulating matrix of any one of clauses 1 to 45, wherein the matrix comprises at least about 90 wt.% of the silicone phase, based on the total weight of the matrix.
Clause 47. The thermally insulating matrix of any one of clauses 1 to 45, wherein the matrix comprises at least about 5 wt.% of the glass filler, based on the total weight of the matrix.
Clause 48. The thermally insulating matrix of clause 47, wherein the matrix comprises about 5-10 wt.% of the glass filler, based on the total weight of the matrix, and wherein said glass filler is glass wool.
Clause 49. The thermally insulating matrix of clause 47, wherein the matrix comprises about 10-30 wt.% of the glass filler, based on the total weight of the matrix, and wherein said glass filler comprises discrete glass particles.
Clause 50. The thermally insulating matrix of any one of clauses 1 to 49, wherein the thermal conductivity of the glass filler is less than about 0.005 W/mK.
Clause 51. The thermally insulating matrix of any one of clauses 1 to 50, wherein the weight ratio between the silicone phase and the glass filler is between about 2:1 and 13: 1.
Clause 52. The thermally insulating matrix of clause 1, wherein the silicone phase is present in the matrix in a weight percent of at least about 90 wt.% and is prepared by combining:
   about 95 - 97 wt.% of Component (A);
   about 3-4 wt.% of Component (B); and
   about 50 to about 100 ppm of the catalyst,
   and wherein the glass filler comprises a non-woven glass wool.
Clause 53. The thermally insulating matrix of any one of clauses 1 to 52, wherein Component (A) is at least partially crosslinked by Component (B).
Clause 54. The thermally insulating matrix of any one of clauses 1 to 53, wherein the silicone phase is prepared by combining a mixture comprising Composition (B) and a first portion of Composition (A) and a mixture comprising the catalyst and a second portion of Composition (A).
Clause 55. The thermally insulating matrix of any one of clauses 1 to 54, which matrix is obtained by mixing the silicone phase with the glass filler, and curing.
Clause 56. The thermally insulating matrix of clause 55, wherein curing is performed at a temperature ranging from about 15 to about 30 °C for about 5 to about 200 hours.
Clause 57. The thermally insulating matrix of clause 55, wherein the silicone phase is prepared no more than about 4 hours prior to mixing the silicone phase with the glass filler.
Clause 58. The thermally insulating matrix of any one of clauses 1 to 57, which wherein the matrix is in the form of comprises a substantially rigid sheet.
Clause 59. The thermally insulating matrix of clause 58, having a thickness ranging from about 0.05 to about 25 mm.
Clause 60. An electrochemical energy generation or storage device comprising the thermally insulating matrix of any one of clauses 1 to 59.
Clause 61. The device of clause 60, wherein at least one side of said matrix contacts at least one lithium-ion battery cell.
Clause 62. A method of manufacturing a thermally insulating matrix comprising:
   mixing a silicone phase prepared by combining:
      Component (A) - a polyorganosiloxane containing two silicon-bonded terminal alkenyl groups per molecule and having a molecular weight ranging from about 15,000 g/mole to about 70,000 g/mole and a kinematic viscosity ranging from about 250 cSt to about 15,000 cSt at 25°C;
      Component (B) - trimethylsiloxane terminated (methylhydrosiloxane - dimethylsiloxane) copolymer comprising from about 15% to about 50% methylhydrosiloxane; and
      a catalyst for a hydrosilylation reaction between Component (A) and Component (B),
      and
   a glass filler having a thermal conductivity of less than about 0.1 W/mK,
   wherein the matrix comprises at least about 50 wt.% of the silicone phase, based on the total weight of the matrix.

While the present invention has been particularly described, persons skilled in the art will appreciate that many variations and modifications can be made. Therefore, the invention is not to be construed as restricted to the particularly described embodiments, and the scope and concept of the invention will be more readily understood by reference to the claims, which follow.

## Claims

1. A thermally insulating matrix comprising:
a silicone phase prepared by combining:
Component (A) - a polyorganosiloxane containing two silicon-bonded terminal alkenyl groups per molecule and having a molecular weight ranging from about 15,000 g/mole to about 70,000 g/mole and a kinematic viscosity ranging from about 250 cSt to about 15,000 cSt at 25°C;
Component (B) - trimethylsiloxane terminated (methylhydrosiloxane - dimethylsiloxane) copolymer comprising from about 15% to about 50% methylhydrosiloxane; and
a catalyst for a hydrosilylation reaction between Component (A) and Component (B),
and
a glass filler having a thermal conductivity of less than about 0.1 W/mK,
wherein the matrix comprises at least about 50 wt.% of the silicone phase, based on the total weight of the matrix.

2. The thermally insulating matrix of claim 1, wherein the catalyst comprises a platinum group metal or a platinum group metal-containing compound.

3. The thermally insulating matrix of claim 1 or claim 2, wherein the catalyst is selected from the group consisting of platinum, rhodium, palladium, platinum chloride, chloroplatinic acid, and salts and complexes thereof.

4. The thermally insulating matrix of any one of claims 1 to 3, wherein the catalyst is present in an amount of up to about 200 ppm, based on the total weight of the silicone phase.

5. The thermally insulating matrix of any one of claims 1 to 4, wherein Component (B) comprises from about 25% to about 35% methylhydrosiloxane.

6. The thermally insulating matrix of any one of claims 1 to 5, wherein Component (B) has a molecular weight ranging from about 500 g/mole to about 5000 g/mole.

7. The thermally insulating matrix of any one of claims 1 to 6, wherein Component (B) has a kinematic viscosity ranging from about 5 cSt to about 200 cSt.

8. The thermally insulating matrix of any one of claims 1 to 7, wherein a number of silicon-bonded hydrogen atoms contained in Component (B) ranges from about 1 to about 3 per alkenyl group contained in Component (A).

9. The thermally insulating matrix of any one of claims 1 to 8, wherein a number of silicon-bonded hydrogen atoms contained in Component (B) is at least about 1.5 per alkenyl group contained in component (A).

10. The thermally insulating matrix of any one of claims 1 to 9, wherein Component (B) is present in a weight percent ranging from about 2.5 wt.% to about 7 wt.%, based on the total weight of the silicone phase.

11. The thermally insulating matrix of any one of claims 1 to 10, wherein the alkenyl groups are selected from the group consisting of a vinyl group, allyl group, 1-butenyl group, 1-hexenyl group, and a combination thereof.

12. The thermally insulating matrix of any one of claims 1 to 11, wherein Component (A) comprises vinyl terminated polydimethylsiloxane.

13. The thermally insulating matrix of any one of claims 1 to 12, wherein the molecular weight of Component (A) ranges from about 15,000 g/mole to about 50,000 g/mole.

14. The thermally insulating matrix of any one of claims 1 to 13, wherein the kinematic viscosity of Component (A) ranges from about 500 cSt to about 2,000 cSt at 25°C.

15. The thermally insulating matrix of any one of claims 1 to 14, wherein Component (A) is present in a weight percent of up to about 98 wt.%, based on the total weight of the silicone phase.
